Europäisches Patentamt

European Patent Office

Office européen des brevets

(11) Publication number: **0 322 025 B1**

# EUROPEAN PATENT SPECIFICATION

(45) Date of publication of patent specification: **30.03.94**  (51) Int. Cl.⁵: **H04L 25/08**, H04Q 11/04, H03K 17/687

(21) Application number: **88202851.7**

(22) Date of filing: **13.12.88**

(54) Transmitter circuit.

(30) Priority: **23.12.87 BE 8701480**

(43) Date of publication of application:
**28.06.89 Bulletin 89/26**

(45) Publication of the grant of the patent:
**30.03.94 Bulletin 94/13**

(84) Designated Contracting States:
**AT BE CH DE ES FR GB IT LI NL SE**

(56) References cited:
**US-A- 3 541 239**
**US-A- 3 757 168**
**US-A- 4 620 310**

**IEEE INTERNATIONAL CONFERENCE ON COMMUNICATIONS 1986, Toronto, CA, 22nd-25thJune 1986, vol. 1 of 3, pages 336-340, IEEE, New York, US; L.M. SMITH: "ISDNuser-network interfaces (layer 1)"**

(73) Proprietor: **ALCATEL N.V.**
**Strawinskylaan 341,**
**(World Trade Center)**
**NL-1077 XX Amsterdam(NL)**
(84) Designated Contracting States:
**CH DE ES FR GB IT LI NL SE AT**

(73) Proprietor: **BELL TELEPHONE MANUFACTUR-ING COMPANY Naamloze Vennootschap**
**Francis Wellesplein 1**
**B-2018 Antwerp(BE)**

(84) Designated Contracting States:
**BE**

(72) Inventor: **Verbert, Robert Eugène Philomena**
**Berendrechtstraat 34**
**B-2020 Antwerpen(BE)**
Inventor: **Van Simaeys, François**
**Koningsveldstraat 43**
**B-1040 Brussel(BE)**

(74) Representative: **Vermeersch, Robert et al**
**BELL TELEPHONE MANUFACTURING COM-PANY**
**Naamloze Vennootschap**
**Patent Department**
**Francis Wellesplein 1**
**B-2018 Antwerpen (BE)**

## Description

The present invention relates to a transmitter circuit for a transmission system wherein a plurality of such transmitter circuits are coupled in parallel to a transmission line which is coupled to a receiver circuit, said transmitter circuit having an output which is electrically coupled to said line but is galvanically isolated therefrom and is able to supply at said output a current and to limit this current in function of the voltage on said output.

Such a transmitter circuit is already known from the article "System 12. Configuration for ISDN Subscriber Equipment, Network Termination, Digital Telephones and Terminal Adapters" by T. Israel et al, Electrical Communication, Volume 59, Number 1/2, 1985, pp. 120-126.

As described in this article the transmitter circuits and the receiver circuit form part of respective S-interface circuits located in subscriber stations and in a network station respectively, this network station being coupled to a digital exchange through a subscriber line. Each of these S-interface circuits further includes a receiver circuit and a transmitter circuit respectively, these receiver circuits being coupled in parallel to another transmission line to which the transmitter circuit of the network station has access. The S-interface circuits are for instance of the type disclosed in the article "ISDN Components for Public and Private Digital Loops" by P. Van Iseghem et al, Electrical Communication, Volume 61, November 1, 1987, pp 63-71.

Each S-interface circuit is for instance able to transmit a 192 kbit/sec signal consisting of groups of frames of 42 bits, 36 of which are information bits part of two B channels of 16 bits each and of a D channel of 4 bits. Thus 12 bits per frame are left for signals which may be added by the interface. In the direction from the network station to the subscriber station four of these bits form an echo channel for the retransmission of the D channel bits received from the subscriber station. This retransmission is required to ensure that only one transmitter circuit makes use of this channel. Indeed, the transmitter circuit of a subscriber station starts transmitting the address assigned to this station only when the D channel is free. When the bits of this address are received in the network station receiver they are retransmitted to the subscriber station receiver with a predetermined delay in the D echo channels, and the transmitter of this station only transmits a next bit after it has received the echo bits. As long as these bits are the same as the transmitted D channel bits the subscriber station transmitter continues transmitting. However, if in this station a difference is detected due to several subscriber station transmitter circuits having simultaneously transmitted their addresses this station ceases transmission.

To be noted that for transmission a pseudoternary code is used in which a binary one is represented by the absence of current and binary zero by a positive and a negative current alternately.

In the above first mentioned article no details are given about the transmitter circuit, but it is mentioned therein that this circuit must act as voltage-limited current source and that the output current has to be limited so that the voltage across the transmission line never exceeds a predetermined value even when several stations are transmitting simultaneously.

An object of the present invention is to provide a transmitter circuit of this type, but which is able to fulfill these requirements in a simple way.

According to the invention this object is achieved due to the fact that said transmitter output is shunted by a variable impedance which is controlled by the output of a servo control circuit which is operated in function of the difference between a reference voltage and a feedback voltage which is itself function of the transmitter circuit output voltage.

In this way the servo control circuit becomes operative for instance as soon as the feedback voltage decreases below the reference voltage and this feedback voltage is limited to the reference voltage due to which the output voltage of the transmitter circuit is limited.

It should be noted that the article "ISDN user-network interfaces (layer 1)" by Larry M. Smith, published in the IEEE International Conference on Communication 1986, Toronto, Canada, 22nd-25th June 1986, Vol. 1 of 3, pages 336-340, IEEE, New York, USA, already discloses in page 339, left hand column, sixth paragraph the idea of varying the output impedance of a transmitter. However, no details are given therein of how this is practically performed.

Another characteristic feature of the present transmitter circuit is that said servo control circuit includes a comparator circuit which is constituted by a first operational amplifier whose first and second inputs are controlled by said reference voltage and by said feedback voltage respectively.

Still another characteristic feature of the present transmitter circuit is that said variable impedance is coupled, in series with a current source, across two DC supply voltages and that the end of said impedance which is connected to said current source is coupled to said second input of said first operational amplifier.

In this way the transmitter circuit output voltage is limited to a voltage which is equal to the difference of one of the DC supply voltages and the reference voltage.

The invention also relates to a transmitter circuit provided with a contact system which includes at least one electronic contact device including : a main transistor switch connected between first and second terminals and having a control third terminal; first and second auxiliary transistor switches connected between said third terminal and a fourth terminal and between said third terminal and a fifth terminal respectively; and control means to bring said first and second auxiliary transistor switches in opposite conditions wherein one is blocked and the other is conductive.

Thus the main transistor switch is made conductive or blocked in a simple way due to which such contact systems may be used in the above described transmitter circuit in a simple way to control the direction of current flow through the variable impedance.

The above mentioned and other objects and features of the invention will become more apparent and the invention itself will be best understood by referring to the following description of an embodiment taken in conjunction with the accompanying drawings wherein :

Fig. 1 is a schematic diagram of a transmission system including a transmitter circuit according to the invention;

Fig. 2 represents transmitter circuit TR1 of Fig. 1 in detail.

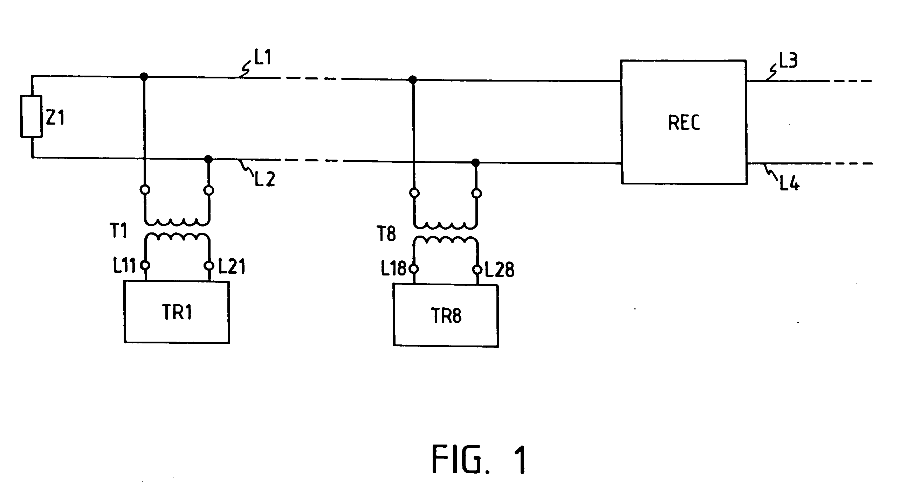

The transmission system shown in Fig. 1 includes a plurality of transmitter circuits TR1/8 which are coupled in parallel to a transmission line L1, L2. More particularly, each of these transmitter circuits TR1 to TR8 has an output, with terminals L11, L21 to L18, L28, which is coupled to the line L1, L2 through a respective transformer T1/8. At its one end the transmission line L1, L2 is connected to a receiver circuit REC which is coupled to a digital exchange (not shown) through a subscriber line L3, L4, whilst at its other end it is terminated by an impedance Z1.

Each of the transmitter circuits TR1/8 as well as the receiver circuit REC forms part of an S-interface circuit (not shown) which is able to perform the functions described above, e.g. to generate a current I, or -I, or no current between its output terminals L11 and L21/L18 and L28.

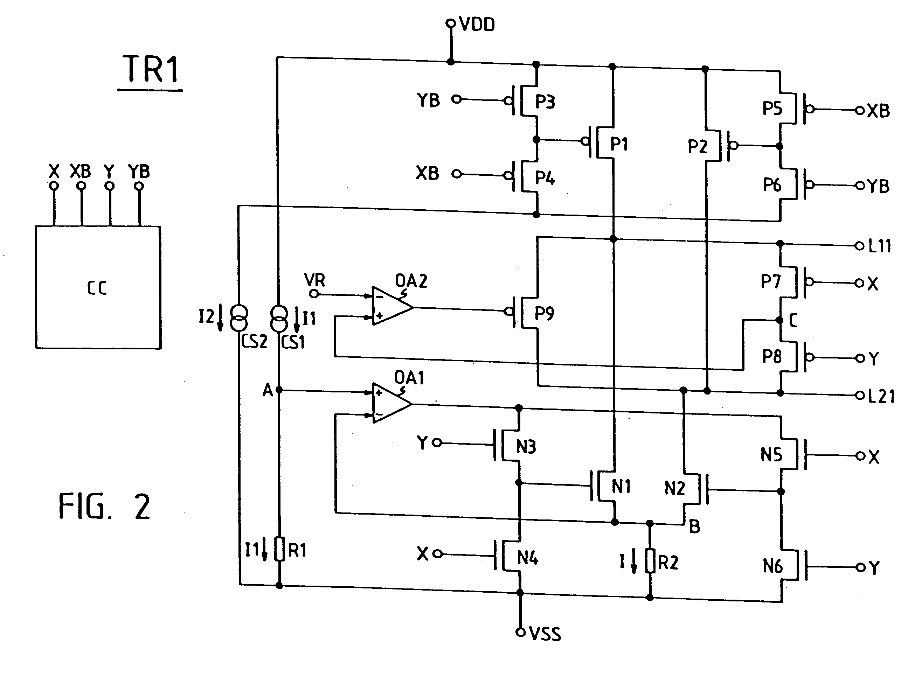

The transmitter circuits TR1 to TR8 are identical and therefore only one of them, i.e. TR1, and an associated control circuit CC which together with TR1 forms part of an S-interface is represented in detail in Fig. 2. The transmitter circuit TR1 operates with the supply voltages VDD = 5 Volts and VSS = 0 Volt and with a bandgap reference voltage VR = 2.9 Volts and includes constant current sources CS1 and CS2 which provide a current equal to I1 = 300 and I2 = 80 micro-amperes respectively, operational amplifiers OA1 and OA2, PMOS field effect transistors P1 to P9, NMOS field effect transistors N1 to N6 and resistors R1 and R2. The control circuit CC provides control signals X, XB, Y and YB which directly control the gates of the transistors P3 to P8 and N3 to N6. Hereby XB and YB are the inverse of X and Y respectively.

The current source CS2 is in fact derived by current mirroring (not shown) from the accurate current source CS1. In this way a DC resistance which is not very accurate but sufficiently accurate is realised in a simple way.

The current source CS1 is connected in series with resistor R1 between the supply voltages VDD and VSS and develops a constant voltage VA = R1.I1 thereon. Their junction point A is connected to the non-inverting input of operational amplifier OA1 whose inverting input is connected to the junction point B of two parallel circuits which are both connected in series with resistor R2 between VDD and VSS. The first of these parallel circuits comprises the series connection of the source-to-drain paths of transistors P1 and P9 and the drain-to-source path of transistor N2. The second of these parallel circuits comprises the series connection of the source-to-drain paths of transistors P2 and P9 and the drain-to-source path of transistor N1. The gate of transistor P9 is controlled by the output signal of the operational amplifier OA2 whose inverting input is connected to the reference voltage VR and the non-inverting input of which is connected to the junction point C of transistors P7 and P8 which together with the transistor P1/6 and N1/N6 constitute a switching circuit. The drain-to-source paths of the transistors P7 and P8 are connected between terminal C and L11 and between terminal L21 and C respectively and their gates are controlled by the control signals X and Y respectively.

The gates of transistors P1, P2, N1, N2 are controlled by the transistors P3 to P6 and N3 to N6 and permit the flow of current from the end L11 to the end L21 of P9 or vice-versa. More particularly, the source-to-drain paths of transistors P3 and P4 as well as the source-to-drain paths of transistors P5 and P6 are connected in series with the constant current source CS2 between VDD and VSS, and the junction points of P3 and P4 and of P5 and P6 are connected to the gates of P1 and P2 respectively. The gates of P3, P4, P5 and P6 are controlled by the respective control signals YB, XB, XB and YB provided by the control circuit CC.

Likewise, the gates of transistors N1 and N2 are controlled by the transistors N3, N4 and N5, N6 respectively. Indeed, the drain-to-source paths of transistors N3 and N4 as well as the drain-to-source paths of transistors N5 and N6 are connected in series between the output of operational amplifier OA1 and VSS, and the junction points of N3 and N4 and of N5 and N6 are connected to the gates of N1 and N2 respectively. The gates of N3, N4, N5 and N6 are controlled by the respective control signals Y, X, X and Y provided by the control circuit CC.

As will become clear later, the operational amplifier OA2 together with the transistors P7, P8 and P9 constitutes a servo control circuit of which the forward path includes transistor P9 and the feedback path includes transistor P7 or P8. The operational amplifier OA1 has an input A to which the fixed voltage VA is applied and a feedback path which is closed via N3, N1 or via N5, N2. This operational amplifier OA1 together with R2 constitutes a constant current source by which the constant current I1 provided by CS1 is converted to a constant current I in R2.

The above described transmitter circuit TR1 and the transmission system of which it forms part operate as follows.

Under the control of the above described switching circuit P1/8, N1/6 which is itself controlled by the circuit CC providing the control signals X = YB = 1, XB = Y = 1 or X = Y = 1, the transmitter circuit provides a current which flows from L11 to L21 and is equal to I, -I or zero respectively.

In case X = YB = 1 the transistors P4, P5, P8, N4 and N5 are conductive, whereas the transistors P3, P6, P7, N3 and N6 are blocked. As a consequence thereof :

- transistor P1 is conductive because its gate is connected to VSS via P4 and the DC resistance of the current source CS2 in series;
- transistor N2 is conductive since its gate is connected to the positive output of OA1 via N5;
- transistors P2 and N1 are both blocked because P5 and N4 interconnect the source and the gate of P2 and of N1 directly and via R2 respectively.

Because the feedback loop of the amplifier OA2 is closed through transistor P8 the voltage VC then applied to the non-inverting input of OA2 is substantially equal to

$$VC = VDD-V \qquad (1)$$

where V is the voltage across the terminals L11, L21.

Also the feedback path of the operational amplifier OA1 is closed via N5 and N2 so that the voltage on the junction point B is equal to VA and that a constant current $I = I1\frac{R1}{R2}$ flows through resistance R2. In a preferred embodiment the ratio $\frac{R1}{R2}$ is for instance equal to 25, so that with the above given value of I1 = 300 micro-Amperes the current I is equal to 7.5 milli-Amperes. This current I flows from VDD to VSS via transistor P1, terminal L11, primary winding of transformer T1, terminal L21, transistor N2 and resistance R2.

In a similar way, when XB = Y = 1 the transistors P4, P5, P8, N4 and N5 are blocked whereas the transistors P3, P6, P7, N3 and N6 are conductive due to which transistors P1, N2 are blocked and P2, N1 are conductive. Because the feedback path of OA2 is closed via transistor P7 the voltage VC on the non-inverting input of OA2 is again given by the relation (1). Also the feedback path of OA1 is closed via N3 and N1 so that VB = VA, due to which the current I flows from VDD to VSS through transistor P2, terminal L21, primary winding of transformer T1, terminal L11, transistor N1 and resistance R2. In other words, the current I now flows in the reverse direction (from L21 to L11) through the primary winding than when X = YB = 1.

Finally, in case X = Y = 1 the transistors P1, P2, P7, P8, N1 and N2 ar blocked so that no current is supplied to the line.

It should be noted that in the current source CS1, R1, OA1, R2 the constant current I1 is converted in the current I by multiplication with the ratio R1/R2. Because the current I1 may thus be chosen relatively small, the power consumption of the whole transmitter circuit is limited. On the other hand it is easier to realise an accurate ratio of resistances than to make accurate resistances.

Because of the presence of the transformer T1 which for instance has a winding ratio equal to n the primary current I is transformed into a secondary current I' = nI. In a preferred embodiment n = 2.

As long as only this current I' is supplied to the receiver circuit REC, i.e. as long as the difference between the number of transmitter circuits supplying a current I in one direction and the number of transmitter circuits supplying a current in the opposite direction is equal to 1, the voltage V' = Z'I' is developped across the transmission line impedance Z'. The value of the current I' has been so chosen that it gives rise in each of the transmitter circuits, such as TR1, supplying a current I to a voltage V = nV' which is such that VC is larger than the reference voltage VR. The output of the amplifier OA2 is therefore positive due to which transistor P9 is blocked.

In a preferred embodiment Z' = 50 ohms and n = 2 so that the line impedance seen at the terminals L11, L21 is equal to Z = 200 ohms. With I = 7.5 milli-Amperes one has V = 1.5 Volts so that VC = VDD-V = 3.5 Volts which is larger than VR = 2.9 Volts.

As soon as a current mI', with m >= 2, is supplied to the receiver circuit REC, i.e. as soon as the difference between the number of transmitter circuits supplying a current I in one direction and the number of transmitter circuits supplying a current in the opposite direction is at least equal to 2, the voltage then developed across the transmission line impedance Z' is equal to $V' = mZ'l'$ which is thus m times as large than when m = 1. In each of the transmitter circuits, e.g. p, this gives rise to a voltage V which is also m times larger and such that VC is smaller than VR.

In the above example and with m = 2, one has V = 3 Volts so that VC = VDD-V = 2 Volts which is indeed smaller than VR = 2.9 Volts.

As a consequence, in each of the p transmitter circuits the output of amplifier OA2 is de-activated due to which the associated transistor P9 is rendered conductive. Thus its impedance which is called P9 is connected across the terminals L11, L21 and transformed into an impedance $P'9 = P9/N$ across the line, N being equal to the square of n. Hence p impedances P'9 are connected in parallel with the line impedance Z' to provide a total line impedance Z'2 across which a voltage V' is developped. This total line impedance Z'2 and this voltage V' are transformed in each of the p transmitter circuits into a line impedance $Z2 = Z'2.N$ and a voltage $V = nV'$ respectively.

By the action of the servo control circuit in each of the p transmitter circuits the impedance P9 and therefore also the impedance Z2 is so regulated that the voltage V satisfies the relation

$$VR = VDD-V \qquad (2)$$

or

$$V = VDD-VR \qquad (3)$$

In the above example one obtains V = 2.1 Volts.

Hence, by the action of each of the servo control circuits the voltage V across the terminals L11, L21 is limited to a constant value as soon as the current supplied to the receiver circuit REC is at least equal to 2l'.

In connection with the above it may be noted that by the use of the switching means the same accurate current I is supplied to the transmission line in the one or other direction. In this way the problem of current inequality is avoided which may occur when another current source is used for each current direction.

It may also be noted that the above described switching circuit P1/6, N1/6 in fact consists of four similar electronic contact devices P1/3/4, P2/5/6, N1/4/3 and N2/6/5. Each of these devices, for instance P1/3/4 includes :

- a main transistor switch P1 which is connected with its source and drain electrodes between first and second terminals and which has a control third terminal constituted by its gate;
- first and second auxiliary transistor switches P3 and P4 which are connected with their source and drain electrodes between said third terminal and a fourth terminal and between said third terminal and a fifth terminal respectively;
- control means (CC) to bring said first and second auxiliary transistor switches P3 and P4 in opposite conditions, wherein the one is blocked and the other is conductive.

If, as shown for P1 and P3, the first and fourth terminals are interconnected, making P3 conductive has for effect - as described above - that the source and the gate of P1 are short-circuited due to which the operation of P1 is prevented, whilst making P4 conductive has for effect that the potential at the fifth terminal is applied to the gate of P1 due to which the latter may become conductive. The same operation applies for N1, N4 and N2, N6 although the sources of these transistors are connected via the small resistance R2.

While the principles of the invention have been described above in connection with specific apparatus, it is to be clearly understood that this description is made only by way of example and not as a limitation on the scope of the invention.

**Claims**

1.  Transmitter circuit (TR1) for a transmission system wherein a plurality of such transmitter circuits (TR1/8) are coupled in parallel to a transmission line (L1, L2) which is coupled to a receiver circuit (REC9) said transmitter circuit (TR1) having an output (L11, L21) which is electrically coupled to said line but is galvanically isolated therefrom and is able to supply at said output a current (I) and to limit this current in function of the voltage on said output, characterized in that said transmitter circuit output (L11, L21) is shunted by a variable impedance (P9) which is controlled by the output of a servo control circuit (OA2, P7/8) which is operated in function of the difference between a reference voltage (VR) and a feedback voltage (VC) which is itself function of the transmitter circuit output voltage (V).

2.  Transmitter circuit according to claim 1, characterized in that said servo control circuit (OA2, P7/8) includes a comparator circuit which is constituted by a first operational amplifier (OA2) whose first and second inputs are controlled by said reference voltage (VR) and by said feedback voltage (VC) respectively.

3. Transmitter circuit according to claim 2, characterized in that said variable impedance (P9) is coupled, in series with a current source (OA1, CS1, R1, R2), across two DC supply voltages (VDD, VSS), and that the end of said impedance (P9) which is connected to said current source (OA1, CS1, R1, R2) is coupled to said second input of said first operational amplifier (OA2).

4. Transmitter circuit according to claim 3, characterized in that said current source (OA1, CS1, R1, R2) includes a second operational amplifier (OA1) having an output which is coupled on the one hand with said second input and on the other hand with a first resistance (R2) which is itself coupled in series with said variable impedance (P9).

5. Transmitter circuit according to claim 4, characterized in that the first input of said second operational amplifier (OA1) is connected to the junction point (A) of a first constant current source (CS1) and a second resistance (R1) which form part of said first mentioned current source and are coupled in series between said two DC voltages (VDD, VSS), due to which a predetermined voltage is provided at said junction point (A).

6. Transmitter circuit according to claim 2, characterized in that said variable impedance (P9) is a PMOS transistor whose gate is controlled by the output of said first operational amplifier (OA2) and whose end which is connected to said current source (OA1, CS1, R1, R2) is coupled to the non-inverting second input of said first operational amplifier (OA2).

7. Transmitter circuit according to claim 1, characterized in that it is provided with an electronic contact system which includes at least one electronic contact device including : a main transistor switch (P1; N2; P2; N1) connected between first (VDD; VSS) and second (L11; L21; L21; L11) terminals and having a control third terminal; first (P3; N6; P5; N4) and second (P4; N5; P6; N3) auxiliary transistor switches connected between said third terminal and a fourth terminal and between said third terminal and a fifth terminal respectively ; and control means (CC) to bring said first (P3; N6; P5; N4) and second (P4; N5; P6; N3) auxiliary transistor switches in opposite conditions wherein one is blocked and the other is conductive.

8. Transmitter circuit according to claims 3 and 7, characterized in that said first and fourth terminals on the one hand and said second terminal on the other hand are coupled with different ones of said two DC supply voltages (VDD, VSS; VSS, VDD) and said fifth terminal is coupled with a third DC voltage between said two DC voltages.

9. Transmitter circuit according to claim 8, characterized in that it includes at least one pair of said devices which is constituted by a first (P1/3/4;P2/5/6) and a second (N2/6/5; N1/4/3) of said contact devices whose first terminals are coupled with a first (VDD) and a second (VSS) of said DC supply voltages and whose second terminals are coupled with different terminals (L11, L21; L21, L11) of said variable impedance (P9).

10. Transmitter circuit according to claims 3 and 9, characterized in that the fourth and fifth terminals of the first device (P1/3/4; P2/5/6) are coupled directly with the first terminal of said device and via a third resistance (CS2) with the fourth terminal of the second device (N2/6/5; N1/4/3) respectively, and that the fourth and fifth terminals of the second device (N2/6/5; N1/4/3) are coupled via said first resistance (R2) with the first terminal of said device and directly with the output of said second operational amplifier (OA1) respectively, whose first input and the output are coupled with the first and fifth terminals of said second device (N2/6/5; N1/4/3) respectively and a predetermined voltage (CS1, R1) being applied to the second input of said second amplifier.

11. Transmitter circuit according to claims 5 and 10, characterized in that said third resistance is provided by a second constant current source (CS2) which is coupled with said first constant current source (CS1) connected in series with said second resistance (R1) between the first terminal of the first device and the fourth terminal of the second device, said predetermined voltage being provided at the junction point (A) of said first constant current source (CS1) and the second resistance (R1), said first operational amplifier (OA2), said first (R2) and second (R1) resistances and said first constant current source (CS1) constituting together said current source.

12. Transmitter circuit according to claim 11, characterized in that it includes a first (P1/3/4; P2/5/6) and a second pair (N2/5/6; N1/3/4) of said devices, the first and second devices of the first pair being coupled with first and second terminals of said variable impedance, whilst the first and second devices of the second pair are coupled with said second and first terminals of said variable impedance, and that the first, fourth and fifth terminals of the first devices of said pairs as well as of the second devices thereof are common.

**Patentansprüche**

1. Senderschaltung (TR1) für ein Uebertragungssystem, in dem eine Mehrzahl solcher Senderschaltungen (TR1/8) parallel an eine Uebertragungsleitung (L1, L2) gekoppelt ist, welche ihrerseits an eine Empfängerschaltung (REC9) gekoppelt ist, wobei die Senderschaltung (TR1) einen Ausgang (L11, L21) aufweist, der elektrisch an die Leitung gekoppelt, galvanisch aber davon isoliert ist, und die in der Lage ist, einen Strom (I) an den Ausgang zu liefern und diesen in Funktion der Spannung am Ausgang zu begrenzen, dadurch gekennzeichnet, dass zum genannten Senderschaltungsausgang (L11, L21) eine variable Impedanz (P9) parallelgeschaltet ist, die vom Ausgang einer Reglerschaltung (OA2, P7/8) gesteuert wird, welche in Funktion des Unterschieds zwischen einer Referenzspannung (VR) und einer Rückkopplungsspannung (VC), die ihrerseits eine Funktion der Senderschaltungsausgangsspannung (V) ist, arbeitet.

2. Senderschaltung gemäss Anspruch 1, dadurch gekennzeichnet, dass die Reglerschaltung (OA2, P7/8) eine Vergleicherschaltung enthält, die aus einem ersten Operationsverstärker (OA2) besteht, dessen erster und zweiter Eingang von der Referenzspannung (VR) bzw. der Rückkopplungsspannung (VC) angesteuert werden.

3. Senderschaltung gemäss Anspruch 2, dadurch gekennzeichnet, dass die variable Impedanz (P9), in Serie mit einer Stromquelle (OA1, CS1, R1, R2), kreuzweise zwischen zwei Versorgungs-Gleichspannungen (VDD, VSS) geschaltet wird, und dass das mit der Stromquelle (OA1, CS1, R1, R2) verbundene Ende der Impedanz (P9) an den zweiten Eingang des ersten Operationsverstärkers (OA2) gekoppelt wird.

4. Senderschaltung gemäss Anspruch 3, dadurch gekennzeichnet, dass die Stromquelle (OA1, CS1, R1, R2) einen zweiten Operationsverstärker (OA1) enthält, dessen Ausgang einerseits an den genannten zweiten Eingang und andererseits an einen ersten Widerstand (R2), der seinerseits in Serie zur variablen Impedanz (P9) liegt, gekoppelt ist.

5. Senderschaltung gemäss Anspruch 4, dadurch gekennzeichnet, dass der erste Eingang des zweiten Operationsverstärkers (OA1) mit einem Anschlusspunkt (A) einer ersten Konstantstromquelle (CS1) und eines zweiten Widerstands (R1) verbunden ist, die Teil der erstgenannten Stromquelle bilden und in Serie zwischen den zwei erwähnten Gleichspannungen (VDD, VSS) angeschlossen sind, wodurch am Anschlusspunkt (A) eine vorbestimmte Spannung anliegt.

6. Senderschaltung gemäss Anspruch 2, dadurch gekennzeichnet, dass die variable Impedanz (P9) ein PMOS-Transistor ist, dessen Gate vom Ausgang des ersten Operationsverstärkers (OA2) gesteuert wird, und dessen mit der Stromquelle (OA1, CS1, R1, R2) verbundenes Ende an den nichtinvertierenden zweiten Eingang des ersten Operationsverstärkers (OA2) gekoppelt wird.

7. Senderschaltung gemäss Anspruch 1, dadurch gekennzeichnet, dass sie mit einem elektronischen Kontaktsystem ausgerüstet ist, das wenigstens eine elektronische Kontaktvorrichtung enthält, einschliesslich eines zwischen ersten Anschlüssen (VDD; VSS) und zweiten Anschlüssen (L11; L21; L21; L11) verbundenen, mit einem steuernden dritten Anschluss versehenen Haupt-Transistorschalters (P1; N2; P2; N2), zwischen dem dritten und einem vierten und dem dritten und einem fünften Anschluss verbundener erster Hilfs-Transistorschalter (P3; N6; P5; N4) bzw. zweiter Hilfs-Transistorschalter (P4; N5; P6; N3) sowie Steuermitteln (CC), um die ersten Hilfs-Transistorschalter (P3; N6; P5; N4) und die zweiten Hilfs-Transistorschalter (P4; N5; P6; N3) in entgegengesetzte Zustände zu versetzen, wobei jeweils der eine gesperrt und der andere leitend ist.

8. Senderschaltung gemäss Anspruch 3 und 7, dadurch gekennzeichnet, dass der erste und vierte Anschluss einerseits und der zweite Anschluss andererseits an unterschiedliche der zwei Versorgungs-Gleichspannungen (VDD, VSS; VSS, VDD) geschaltet werden und der fünfte Anschluss an eine dritte, dazwischenliegende Gleichspannung gekoppelt ist.

9. Senderschaltung gemäss Anspruch 8, dadurch gekennzeichnet, dass sie mindestens ein Paar der genannten Vorrichtungen enthält, das aus einer ersten (P1/3/4;P2/5/6) und einer zweiten (N2/5/6;N1/3/4) Kontaktvorrichtung besteht, deren erste Anschlüsse an eine erste (VDD) und eine zweite (VSS) der Versorgungs-Gleichspannungen gekoppelt sind, und deren zweite Anschlüsse an unterschiedliche Anschlüsse (L11, L21; L21, L11) der variablen Impedanz (P9) gekoppelt sind.

10. Senderschaltung gemäss Anspruch 3 und 9, dadurch gekennzeichnet, dass der vierte und fünfte Anschluss der ersten Vorrichtung (P1/3/4; P2/5/6) direkt an den ersten Anschluss derselben bzw. über einen dritten Widerstand (CS2) an den vierten Anschluss der zweiten Vorrichtung (N2/6/5; N1/4/3) gekoppelt sind, und dass der vierte und fünfte Anschluss der zweiten Vorrichtung (N2/6/5; N1/4/3) über den ersten Widerstand (R2) an den ersten Anschluss derselben bzw. direkt an den Ausgang des zweiten Operationsverstärkers (OA1) gekoppelt sind, dessen erster Eingang und Ausgang an den ersten bzw. fünften Anschluss der zweiten Vorrichtung (N2/6/5; N1/4/3) gekoppelt sind, und an dessem zweiten Eingang eine vorgegebene Spannung (CS1, R1) angelegt ist.

11. Senderschaltung gemäss Anspruch 5 und 10, dadurch gekennzeichnet, dass der dritte Widerstand durch eine zweite Konstantstromquelle (CS2) gebildet wird, die mit der ersten, mit dem zweiten Widerstand (R1) in Serie zwischen dem ersten Anschluss der ersten Vorrichtung und dem dem vierten Anschluss der zweiten Vorrichtung verbundenen Konstantstromquelle (CS1) gekoppelt ist, wobei die vorgegebene Spannung am Anschlusspunkt (A) der ersten Konstantstromquelle (CS1) und der zweite Widerstand (R1), und der zweite Operationsverstärker (OA1), der erste Widerstand (R2), der zweite Widerstand (R1) und die erste Konstantstromquelle (CS1) zusammen die Stromquelle bilden.

12. Senderschaltung gemäss Anspruch 11, dadurch gekennzeichnet, dass sie ein erstes (P1/3/4; P2/5/6) und ein zweites (N2/5/6; N1/3/4) Paar der genannten Vorrichtung enthält, wobei die erste und die zweite Vorrichtung des ersten Paars an erste und zweite Anschlüsse der variablen Impedanz gekoppelt sind, während die erste und die zweite Vorrichtung des zweiten Paars an die zweiten und ersten Anschlüsse der variablen Impedanz gekoppelt sind, und dass die ersten, vierten und fünften Anschlüsse sowohl der ersten als auch der zweiten Vorrichtung der genannten Paare je gemeinsam sind.

## Revendications

1. Circuit émetteur (TR1) pour un système de transmission dans lequel une pluralité de tels circuits émetteurs (TR1/8) sont couplés en parallèle à une ligne de transmission (L1, L2) qui est couplée à un circuit récepteur (REC), ledit circuit émetteur (TR1) ayant une sortie (L11, L21) qui est électriquement couplée à ladite ligne, mais est galvaniquement isolée de celle-ci et est capable de fournir à ladite sortie un courant (I) et de limiter ce courant en fonction de la tension sur ladite sortie, caractérisé sur ce que la sortie dudit circuit émetteur (L11, L12) est shunté par une impédance variable (P9) qui est commandée par la sortie d'un circuit d'asservissement (0A2, P7/8) qui répond en fonction de la différence entre une tension de référence (VR) et une tension de contre-réaction (VC) qui est elle-même fonction de la tension de sortie du circuit émetteur (V).

2. Circuit émetteur conforme à la revendication 1, caractérisé en ce que ledit circuit d'asservissement (OA2, P7/8) comprend un circuit comparateur qui est constitué par un premier amplificateur opérationnel (OA2) dont les première et seconde entrées sont respectivement commandées par ladite tension de référence (VR) et ladite tension de contre-réaction (VC).

3. Circuit émetteur conforme à la revendication 2, caractérisé en ce que ladite impédance variable (P9) est couplée, en série avec une source de courant (OA1, CS1, R1, R2), entre deux tensions d'alimentation continue (VDD, VSS) et en ce que l'extrémité de ladite impédance (P9) qui est connectée à ladite source de courant (OA1, CS1, R1, R2) est couplée à ladite seconde entrée dudit premier amplificateur opérationnel.

4. Circuit émetteur conforme à la revendication 3, caractérisé en ce que ladite source de courant (OA1, CS1, R1, R2) comprend un deuxième amplificateur opérationnel (OA1) ayant une sortie qui est couplée, d'une part, à ladite second entrée et, d'autre part, à une première résistance (R2) qui est elle-même couplée en série avec ladite impédance variable (P9).

5. Circuit émetteur conforme à la revendication 4, caractérisé en ce que la première entrée dudit deuxième amplificateur opérationnel (OA1) est connectée au point de jonction (A) d'une première source à courant constant (CS1) et d'une deuxième résistance (R1) qui font partie de ladite première source de courant mentionnée et sont couplées en série entre lesdites tensions continues (VDD, VSS), grâce à quoi une tension prédéterminée est fournie audit point de jonction (A).

6. Circuit émetteur conforme à la revendication 2, caractérisé en ce que ladite impédance variable (P9) est un transistor de type PMOS dont la grille est commandée par la sortie dudit premier amplificateur opérationnel (OA2) et dont l'extrémité qui est connectée à ladite source de courant (OA1, CS1, R1, R2) est couplée à l'entrée non-inverseuse dudit premier amplificateur opérationnel (OA2).

7. Circuit émetteur conforme à la revendication 1, caractérisé en ce qu'il est pourvu d'un système de contact électronique qui comprend au moins un dispositif de contact électronique incluant : un commutateur à transistor principal (P1; N2; P2; N1) connecté entre une dite première (VDD, VSS) et une deuxième (L11; L21; L21; L11) borne et ayant une troisième borne de commande; des premier (P3; N6; P5; N4) et deuxième (P4; N5; P6; N3) commutateurs auxiliaires à transistor respectivement connectés entre ladite troisième et une quatrième borne et entre ladite troisième borne et une cinquième borne; ainsi que des moyens de commande (CC) pour porter lesdits premiers (P3; N6; P5; N4) et deuxième (P4; N5; P6; N3) commutateurs auxiliaires à transistor dans des conditions opposées dans lesquelles l'un est bloqué et l'autre conducteur.

8. Circuit émetteur conforme aux revendications 3 et 7, caractérisé en ce que lesdites première et quatrième bornes d'une part, et ladite deuxième borne, d'autre part, sont couplées chacune à une différente des deux dites tensions d'alimentation continues (VDD, VSS; VSS, VDD) et en ce que ladite cinquième borne est couplée à une troisième tension continue située entre lesdites deux tensions continues.

9. Circuit émetteur conforme à la revendication 8, caractérisé en ce qu'il comprend au moins une paire desdits dispositifs qui est constituée par un premier (P1/3/4; P2/5/6) et un deuxième (N2/6/5; N1/4/3) desdits dispositifs de contact dont des premières bornes sont couplées à une première (VDD) et une deuxième (VSS) desdites tensions d'alimentation continues et dont des deuxièmes bornes sont couplées à des bornes différentes (L11, L21; L21, L11) de ladite impédance variable (P9).

10. Circuit émetteur conforme aux revendications 3 et 9, caractérisé en ce que lesdites quatrième et cinquième bornes du premier dispositif (P1/3/4; P2/5/6) sont directement couplées respectivement à la première borne dudit dispositif et via une troisième résistance (CS2) à la quatrième borne du deuxième dispositif (N2/6/5; N1/4/3) et en ce que les quatrième et cinquième bornes du deuxième dispositif (N2/6/5; N1/4/3) sont respectivement couplées via ladite première résistance (R2) à la première borne dudit dispositif et, directement, à la sortie dudit deuxième amplificateur opérationnel (OA1) dont la première entrée et la sortie sont respectivement couplées aux première et cinquième bornes dudit deuxième dispositif (N2/6/5; N1/4/3), une tension prédéterminée (CS1, R1) étant appliquée à la deuxième entrée dudit deuxième amplificateur.

11. Circuit émetteur conforme aux revendications 5 et 10, caractérisé en ce que ladite troisième résistance est fournie par une source à courant constant (CS2) qui est couplée à ladite première source à courant constant (CS1) connectée en série avec ladite deuxième résistance (R1) entre la première borne du premier dispositif et la quatrième borne du deuxième dispositif, ladite tension prédéterminée étant fournie eu point de jonction (A) de ladite première source à courant constant (CS1) et de ladite deuxième résistance (R1), ledit premier amplificateur opérationnel (OA2), lesdites première (R2) et deuxième (R1) résistances et ladite première source à courant constant (CS1) constituant ensemble ladite souce de courant.

12. Circuit émetteur coforme à la revendication 11, caractérisé en ce qu'il comprend des première (P1/3/4; P2/5/6) et deuxième (N2/5/6; N1/3/4) paires desdits dispositifs, les premier et deuxième dispositifs de la première paire étant couplés aux première et deuxième bornes de ladite impédance variable, tandis que les premier et deuxième dispositifs de la deuxième paire sont couplés aux deuxième et première bornes de ladite impédance variable, et en ce que les première, quatrième et cinquième bornes des premiers dispositifs desdites paires, de même que des deuxièmes dispositifs de celles-ci, sont communes.

FIG. 1

EP 0 322 025 B1

FIG. 2

EP 0 322 025 B1